# EUROPÄISCHE PATENTSCHRIFT

(11) **EP 1 228 916 B1**
(45) Veröffentlichungstag und Bekanntmachung des Hinweises auf die Patenterteilung: **14.02.2007**
(21) Anmeldenummer: 02000216.8
(22) Anmeldetag: 11.01.2002
(51) Int. Cl.: B60H 1/24, B60H 1/34, B60K 37/00

(54) **Instrumententafel für ein Fahrzeug, insbesondere für ein Kraftfahrzeug**
Dashboard for a vehicle, in particular an automotive vehicle
Tableau de bord pour véhicule, notamment véhicule automobile

(30) Priorität: 26.01.2001 DE 10103551
(43) Veröffentlichungstag der Anmeldung: 07.08.2002
(73) Patentinhaber: Volkswagen Aktiengesellschaft, 38436 Wolfsburg (DE)
(72) Erfinder: Rehmke, Thomas, 29392 Wesendorf (DE); Schulze, Werner, Dr., 38531 Rötgesbüttel (DE)

(56) Entgegenhaltungen:
- DE-A1- 4 338 099
- DE-C1- 19 508 983
- US-B1- 6 508 701

## Beschreibung

Die Erfindung betrifft eine Instrumententafel für ein Fahrzeug, insbesondere für ein Kraftfahrzeug, nach dem Oberbegriff des Anspruchs 1.

Eine derartige Instrumententafel für ein Kraftfahrzeug ist aus der gattungsgemäßen DE 195 08 983 C1 bekannt und weist im montierten Zustand in einem im wesentlichen einer Windschutzscheibe zugewandten großflächigen Oberseitenbereich der Instrumententafel bereichsweise Luftdurchtrittsöffnungen zur diffusen Belüftung des Fahrzeuginnenraums auf.

Konkret ist die Instrumententafel hier aus einem Oberteil und einem Unterteil ausgebildet, wobei im Unterteil eine Mehrzahl von zueinander parallelen, nach oben offenen, separaten Kanälen ausgebildet ist, die sich in Längsrichtung der Instrumententafel erstrecken und von dem Oberteil unmittelbar abgedeckt sind. Das Oberteil besteht aus einer Trägerschicht, die mit einer Folie oder einem textilen Gewebe überzogen sind. Zur Ausbildung der Luftdurchtrittsöffnungen sind im Oberteil mehrere nebeneinander liegende und voneinander beabstandete Lochfelder in Längserstreckungsrichtung der Instrumententafel ausgebildet. Zur Ausbildung dieser Lochfelder ist das Oberteil in den Lochfeldbereichen mit Löchern durchlocht, wobei das Lochfeld im mittleren Bereich der Instrumententafel den kleinsten Lochdurchmesser aufweist und wobei die sich zur Außenseite hin daran anschließenden Lochfelder einen sich von Lochfeld zu Lochfeld ändernden Lochdurchmesser aufweisen, wobei die einzelnen Löcher innerhalb eines Lochfelds jeweils einen konstanten Lochdurchmesser aufweisen.

Mit einem derartigen Aufbau einer Instrumententafel kann die Luftaustrittsgeschwindigkeit im Bereich der Lochfelder im Gegensatz zu herkömmlichen Ausströmdüsen erheblich reduziert werden, so dass es zu keiner von den Fahrzeuginsassen als unangenehm empfundenen zugigen Belüftung aufgrund von hohen Luftausströmgeschwindigkeiten kommt. Mit einer derartigen diffusen Belüftung kann somit für die Insassen ein angenehmes Raumklima geschaffen werden, indem der Fahrzeuginnenraum sanft mit Frischluft versorgt wird. Zudem kann mit einer derartigen diffusen Belüftung der Geräuschpegel im Fahrzeuginnenraum erheblich reduziert werden, da die Luft hier nicht mehr mit einer den hohen Geräuschpegel verursachenden hohen Geschwindigkeit, wie dies bei herkömmlichen Ausströmdüsen der Fall ist, in den Fahrzeuginnenraum einströmt. Zugleich kann mit einer derartigen diffusen Belüftung des Oberseitenbereichs einer Instrumententafel auch gleichzeitig die Wärmeabstrahlung der Instrumententafel in Folge von Sonneneinstrahlung erheblich reduziert werden. Durch das Vorsehen der separaten Kanäle im Unterteil kann die Steifigkeit der Instrumententafel, insbesondere des Oberteils, erhöht werden.

Nachteilig bei diesem Aufbau ist jedoch, dass die einzelne Lochfelder aufweisende Instrumententafel insgesamt optisch wenig ansehnlich ist, so dass ein derartiger Aufbau insbesondere für hochwertige Fahrzeuginnenraumausstattungen weniger gut geeignet ist. Des weiteren ist ein derartiger Aufbau mit Lochfeldern, die jeweils unterschiedliche Lochdurchmesser aufweisen insgesamt nur sehr aufwendig und damit kostenintensiv herzustellen.

Ferner ist aus der DE 43 38 099 A1 eine Instrumententafel für ein Kraftfahrzeug mit an einer Oberseite derselben angeordneten Luftdurchtrittsöffnungen zur diffusen Belüftung des Fahrzeuginnenraums bekannt. Konkret ist hier auf der Oberseite dieser Instrumententafel eine perforierte Luftaustrittsfläche durch eine Vielzahl von in diesem Bereich vorgesehenen Luftaustrittsbohrungen gebildet. In einem dieser Luftaustrittsfläche sowie einer herkömmlichen Mitteldüse zugeordnetem Luftkanal ist eine perforierte Luftklappe schwenkbar angelenkt, die in ihren beiden Schwenkendstellungen wechselweise eine der beiden Anschlussöffnungen für den Luftzutritt zur Luftaustrittsfläche und zur Mitteldüse vollständig überdeckt. Dadurch wird im Bereich der herkömmlichen Mitteldüse bei vorgeschwenkter Luftklappe eine diffuse Belüftung erzielt und kann bei vor die Anschlussöffnung zur Luftaustrittsfläche verschwenkter Luftklappe nahezu kein Luftstrom mehr über die Luftaustrittsfläche austreten. Damit soll ein Wechsel zwischen Diffus- und Direktbelüftung insbesondere im Bereich der Mitteldüse eingestellt werden. Nachteilig bei diesem Aufbau ist, dass auch hier auf der Oberseite der Instrumententafel wieder nur ein Lochfeld ausgebildet ist, was optisch wenig ansehnlich ist. Für den Fall, dass die Luftaustrittsfläche hier relativ großflächig mit einer Vielzahl von Luftaustrittsöffnungen versehen wird, ist regelmäßig keine diffuse Belüftung des Fahrzeuginnenraums mehr gegeben, da sich diese Vielzahl der Luftdurchtrittsöffnungen von ihrer Wirkung her dann zu einer herkömmlichen Ausströmdüse mit hoher Luftaustrittsgeschwindigkeit sowie mit hohem Geräuschpegel addieren. Weiter ist eine derartige Instrumententafel im Oberseitenbereich insgesamt nur relativ schmal und dünn ausgebildet, so dass hier die Gefahr besteht, dass insbesondere bei der Ablage von schwereren Teilen eine Beschädigung der Instrumententafel durch z. B. Eindrücken derselben erfolgt. Eine derartige wenig stabile Instrumententafel ist insbesondere auch im Hinblick auf die Montage schwierig zu handhaben, da sich diese sehr leicht verwindet und ggf. beim Einbauen beschädigt werden kann. Für einen verwindungsfreien Einbau sind daher zur Positionierung der Montage ferner auch stets mehrere Werker erforderlich, was in unerwünschter Weise zeit- und arbeitsaufwendig ist.

Ein ähnlicher Aufbau mit den eben erwähnten Nachteilen ist auch aus der EP 0 713 792 B1 bekannt.

Weiter ist es aus der DE 198 07 259 A1 bekannt, unterhalb einer Windschutzscheibe des Kraftfahrzeugs eine nach oben auf die Windschutzscheibe gerichtete Ausströmerdüse vorzusehen, die als separates Bauteil ausgebildet ist, das nicht Bestandteil der Instrumententafel ist, und die mittels einer Abdeckung abgedeckt ist, die eine Vielzahl von kleinen Durchtrittsöffnungen aufweist. Damit sollen die von der normalerweise durch die Ausströmdüsen mit hoher Geschwindigkeit ausströmenden Luft erzeugten Nebengeräusche beseitigt oder vermindert werden. Diese Ausströmdüse mitsamt der Abdeckung ist hier nicht Bestandteil der Instrumententafel, die sich als separates Bauteil zum Fahrzeuginnenraum hin an die Ausströmdüse anschließt.

Demgegenüber ist es Aufgabe der Erfindung, eine alternative Instrumententafel für ein Fahrzeug, insbesondere für ein Kraftfahrzeug, zu schaffen, mit der auf einfache Weise eine diffuse Belüftung ohne Beeinträchtigung des optischen Gesamteindrucks möglich ist und die zudem stabil aufgebaut und daher einfach zu montieren ist.

Diese Erfindung wird gelöst mit den Merkmalen des Anspruchs 1.

Gemäß Anspruch 1 weist die Instrumententafel einen tragenden stabilen Grundkörper auf, der im Oberseitenbereich mit einem den Grundkörper dort versteifenden flächigen Versteifungsträger verbunden ist, der sich im montierten Zustand der Instrumententafel vorzugsweise über die gesamte Länge des Grundkörpers in Fahrzeugquerrichtung gesehen erstreckt. In den Versteifungsträger ist wenigstens eine Ausströmdüse integriert, die mit Mitteln zum Lenken des Luftstroms in eine bestimmte Richtung versehen ist, wobei jeder Ausströmdüse eine im Grundkörper ausgebildete Luftdurchtrittsöffnung für eine Strömungsverbindung mit einer Luftversorgungseinrichtung entsprechend zugeordnet ist. Weiter ist der Versteifungsträger von oben her mittels einer Abdeckung als optisches Gestaltungselement abgedeckt, die durchgehend perforiert ist mit einem Perforationsmuster dergestalt, dass über die Perforierungen als Luftdurchtrittsöffnungen im Bereich der wenigstens einen Ausströmdüse eine diffuse Belüftung erzielbar ist.

Eine derartig aufgebaute Instrumententafel weist eine Reihe von Vorteilen auf. So ist mit einer derartigen Instrumententafel einerseits eine diffuse, zugfreie Innenraumbelüftung über die von der perforierten Abdeckung abgedeckte wenigstens eine Ausströmdüse möglich, die z. B. besonders vorteilhaft auch als Defrosterdüsen eingesetzt werden kann. Weiter wird mit dem im Bereich der Oberseite der Instrumententafel eingesetzten Grundkörper eine vorteilhafte Versteifung der Instrumententafel erzielt, wodurch die Montage des Instrumententafelträgers im Fahrzeuginnenraum wesentlich vereinfacht wird. Zudem kann mit einer derartigen Versteifung einer Beschädigung der Instrumententafel z. B. beim Abstellen von schwereren Gegenständen sehr gut entgegengewirkt werden.

Weiter wird mittels der durchgehend perforierten Abdeckung ein vorteilhaftes optisches Gestaltungselement geschaffen, das z. B. an ein wiederkehrendes Designelement im Fahrzeuginnenraum sehr gut angepasst werden kann, so dass ein insgesamt optisch hochwertig wirkender Gesamteindruck geschaffen wird. Die im Bereich der Ausströmdüsen angeordneten Perforierungen dienen somit in einer vorteilhaften Doppelfunktion einerseits als Luftaustrittslöcher und andererseits als Bestandteil des einen ästhetischen Gesamteindruck vermittelnden Perforationsmusters. Insbesondere die großflächige Anordnung des Perforationsmusters lässt dabei - anders als dies bei einzelnen technisch bedingten Lochfeldern der Fall ist - einen optisch ansprechenden hochwertigen ästhetischen Gesamteindruck entstehen. Ein Teil der Perforierungen ist daher in einer Doppelfunktion den Ausströmdüsen zugeordnet während ein anderer Teil lediglich gestalterische Funktion aufweist.

In einer besonders bevorzugten Ausführungsform ist der Versteifungsträger mit einer Wabenstruktur als Versteifungsstruktur ausgebildet, da sich hierdurch eine besonders vorteilhafte Versteifung bei gleichzeitig gewichtsgünstiger Bauweise ergibt. Vorteilhaft ist der Versteifungsträger z. B. aus Kunststoff hergestellt.

In einer weiteren vorteilhaften Ausführungsform weisen die Ausströmdüsen Lamellen als Mittel zum Lenken des Luftstroms in eine bestimmte Richtung auf. Derartige Ausströmdüsen mit Lamellen sind besonders einfach und preiswert herzustellen bei hoher Funktionssicherheit.

Für eine gute diffuse Belüftung des Fahrzeuginnenraums und/oder des Windschutzscheibenbereichs ist in einer besonders bevorzugten konkreten Ausführungsform vorgesehen, dass in jedem Endbereich des Versteifungsträgers und/oder in einer mittleren Versteifungsträgerbereich, vorzugsweise randseitig, jeweils Ausströmdüsen ausgebildet sind, die im montierten Zustand einen diffusen Luftstrom in Richtung zur Windschutzscheibe hin und/oder von der Windschutzscheibe weg lenken. Mit einer derartigen Anordnung der Ausströmdüsen in einem lediglich eingeschränkten Teilbereich der Oberseite der Instrumententafel kann eine besonders sanfte Frischluftversorgung für ein angenehmes Raumklima im Fahrzeuginnenraum geschaffen werden. Mit einem derartigen Aufbau wird auch ein großflächiger diffuser Belüftungsbereich vermieden, der regelmäßig entsprechend einer herkömmlichen Ausströmdüse eine Zug- und Geräuschbelastung mit sich bringt.

Grundsätzlich ist es dabei möglich, dass die Ausströmdüsen als separate Bauteile ausgebildet sind, die nach dem Herstellen des Versteifungsträgers in diesen eingesetzt sind, z. B. in entsprechende Aussparungen des Versteifungsträgers integriert werden. Besonders vorteilhaft werden die Ausströmdüsen jedoch bereits integral mit dem Versteifungsträger bei der Herstellung ausgebildet. Damit wird vorteilhaft die Bauteilevielfalt reduziert.

Zur Herstellung eines einzigen durchgehenden Luftkanals für sämtliche Ausströmdüsen wird in einer besonders vorteilhaften Ausgestaltung der Grundkörper von der Unterseite her mit einem Luftkanal-Unterteil verbunden, wobei in diesem Luftkanal-Unterteil ein Anschluss für eine Luftversorgung vorgesehen ist. Mit einem derartigen Luftkanal-Unterteil ist die Ausbildung eines Luftkanals für die Ausströmdüsen auf einfache Weise möglich, wobei mit einem derartigen Luftkanal-Unterteil zudem eine gute weitere Versteifung der Instrumententafelanordnung insgesamt möglich ist.

In einer konkreten Ausgestaltung ist der Grundkörper weiter anschließend an den Versteifungsträger mit einer sich im montierten Zustand der Instrumententafel in Fahrzeugquerrichtung entlang des unteren Windschutzscheibenrandbereichs erstreckenden Ausströmerblende verbunden, in der wenigstens eine mit der Luftversorgungseinrichtung in Strömungsverbindung stehende Ausströmdüse ausgebildet ist. Mit derartigen herkömmlichen Ausströmdüsen kann z. B. bei stark vereisten Scheiben eine zusätzliche Unterstützung der diffusen Luftströmung zugeschaltet werden.

Weiter kann sich im montierten Zustand der Instrumententafel an den Versteifungsträger in Richtung zum Fahrzeuginnenraum hin eine Slushhaut als Außenhaut des Grundkörpers anschließen. Mit einer derartigen Slushhaut ist eine optisch ansprechende und hochwertige Abdeckung des Grundkörpers möglich, wie dies insbesondere für eine hochwertige Fahrzeuginnenraumausstattung von Vorteil ist.

Grundsätzlich gibt es verschiedene Möglichkeiten die Abdeckung auszubilden. In einer ersten Ausführungsform ist die Abdeckung durch eine Blechplatte gebildet. Alternativ dazu kann aber auch eine Gitterplatte verwendet werden oder Kunststoff als Material eingesetzt werden.

Die Abdeckung stellt ein besonders hochwertiges optisches Gestaltungselement für den Fahrzeuginnenraum dar, wenn diese Abdeckung mit einem gleichmäßig strukturierten Perforationsmuster versehen ist, da derartige gleichmäßige Perforationsmuster für einen hohen ästhetischen Eindruck sorgen. Insbesondere kann ein derartiges Perforationsmuster an ein wiederkehrendes Designelement im Fahrzeuginnenraum und/oder an der Fahrzeugaußenseite angepasst sein, so dass sich insgesamt ein geschlossener hochwertiger optischer Gesamteindruck ergibt, wie er insbesondere für hochwertige Fahrzeuginnenraumgestaltungen erforderlich ist.

Die Perforierungen können grundsätzlich z. B. auch in Art einer Gitterstruktur ausgebildet sein. Eine besonders einfache und preiswert herzustellende Perforierung sieht jedoch die Ausbildung der Luftdurchtrittsöffnungen mittels einer Vielzahl von ringförmigen, vorzugsweise zylindrischen Löchern vor.

Die einzelnen Bauteile können untereinander auf herkömmliche Weise mittels Klipp- und/oder Schraubverbindungen verbunden sein. In einer besonders bevorzugten Ausführungsform ist jedoch vorgesehen, dass die Abdeckung mit einem Randbereich um einen entsprechend zugeordneten Randbereich des Versteifungsträgers herumgebogen und befestigt ist. Vorteilhaft können dadurch zusätzliche Befestigungsmittel eingespart werden.

Die Erfindung wird nachfolgend anhand einer Zeichnung näher erläutert.

Es zeigen:
- Fig. 1: eine schematische, perspektivische und auseinander gezogene Darstellung einer aus mehreren Bauteilen aufgebauten erfindungsgemäßen Instrumententafel und
- Fig. 2: eine schematische Schnittansicht durch einen mittleren Bereich der erfindungsgemäßen Instrumententafel im zusammengebauten Zustand.

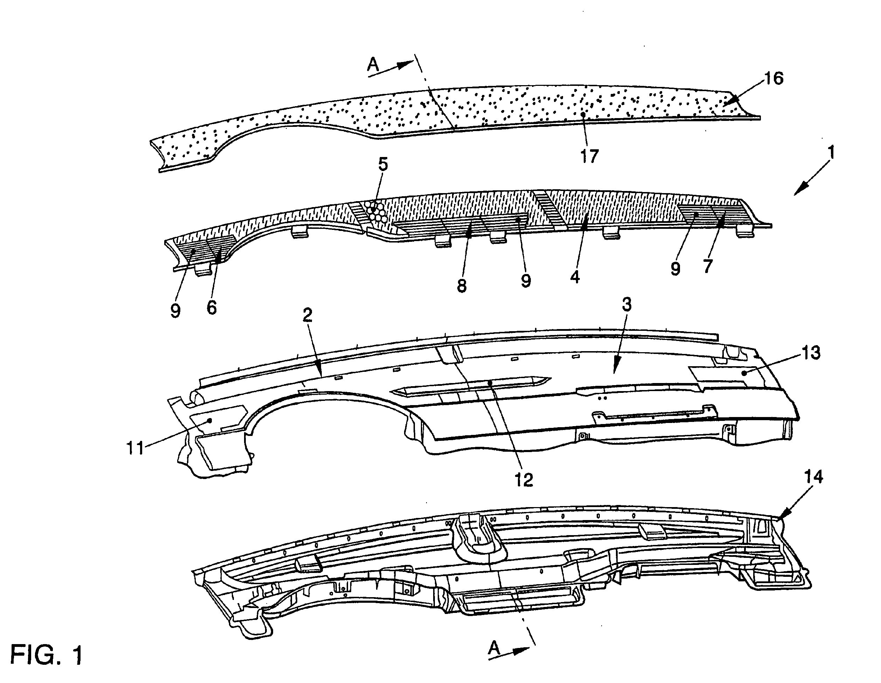

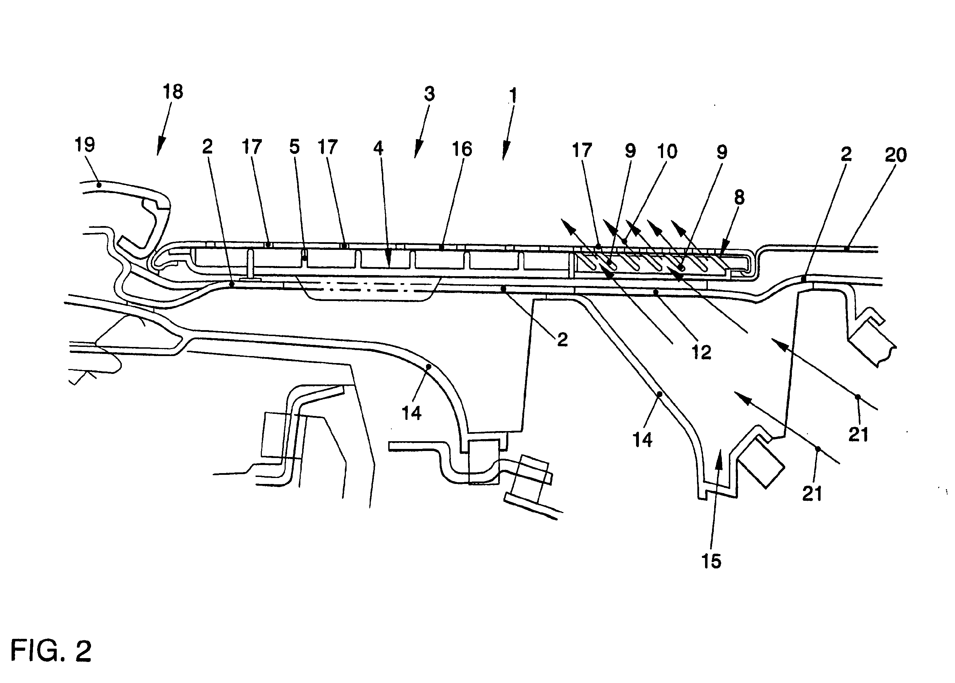

In der Fig. 1 ist schematisch und perspektivisch eine auseinandergezogene Darstellung des Aufbaus der erfindungsgemäßen Instrumententafel 1 dargestellt. In der Fig. 2 ist diese Instrumententafel 1 im zusammengebauten Zustand in einer Schnittansicht dargestellt. Der Schnitt verläuft dabei in etwa entlang der Linie A-A der Fig. 1.

Wie dies aus den Fig. 1 und 2 ersichtlich ist, weist die Instrumententafel 1 einen tragenden stabilen Grundkörper 2 auf, der in einem im wesentlichen in einer Windschutzscheibe, die hier nicht dargestellt ist, zugeordneten großflächigen Oberseitenbereich 3 mit einem flächigen Versteifungsträger 4 verbunden, z. B. verklippst und/oder verschraubt ist. Wie dies insbesondere aus der Fig. 1 ersichtlich ist, weist dieser Versteifungsträger 4 eine Wabenstruktur 5 als Versteifungsstruktur auf und erstreckt sich im montierten Zustand der Instrumententafel 1 über die gesamte Länge des Grundkörpers 2 in Fahrzeugquerrichtung gesehen.

Wie dies weiter insbesondere aus der Fig. 1 ersichtlich ist, sind im Bereich der beiden Versteifungsträgerenden je eine in einem vorderen Randbereich anschließende Ausströmdüse 6, 7 angeordnet. Ebenso ist einem mittleren Versteifungsträgerbereich in einem randseitigen Bereich eine Ausströmdüse 8 vorgesehen. Diese Ausströmdüsen 6, 7, 8 sind vorzugsweise bereits bei der Herstellung des Versteifungsträgers 4 integral mit diesem ausgebildet.

Diese Ausströmdüsen 6, 7, 8 weisen, wie dies aus der Fig. 2 ersichtlich ist, integral damit ausgebildete Lamellen 9 auf, mit denen die Lenkung des Luftstroms in eine bestimmte Richtung möglich ist.

Ferner sind, wie dies in der Fig. 1 schematisch dargestellt ist, im Grundkörper 2 Ausnehmungen 11, 12, 13 ausgebildet, die den einzelnen Ausströmdüsen 6, 7, 8 für eine Strömungsverbindung mit einer Luftversorgungseinrichtung zugeordnet sind.

Wie dies aus der Fig. 1 weiter ersichtlich ist, ist der Grundkörper 2 von der Unterseite her mit einem Luftkanal-Unterteil 14 verbindbar, um einen einzigen durchgehenden Luftkanal 15 (vgl. Fig. 2) für sämtliche der Ausströmdüsen 6, 7, 8 auszubilden. Im Luftkanal-Unterteil 14 ist dazu ein hier nicht dargestellter Anschluss für eine Luftversorgungseinrichtung vorgesehen. Das Luftkanal-Unterteil 14 ist mit dem Grundkörper 2 durch Schraub- und/oder Klippverbindungen auf herkömmliche Weise verbunden.

Den Fig. 1 und 2 kann zudem weiter entnommen werden, dass der Versteifungsträger 4 im montierten Zustand von oben her mittels einer als optisches Gestaltungselement ausgebildeten Lochblechplatte 16 als Abdeckung abgedeckt ist, die durchgehend mit einer Vielzahl von Perforierungen 17 als Luftdurchtrittsöffnungen versehen ist, die vorzugsweise als gleichmäßig strukturiertes Perforationsmuster ausgebildet ist. Dieses Muster ist hier lediglich äußerst schematisch dargestellt. Diese Lochblechplatte 16 ist, wie dies aus der Fig. 2 ersichtlich ist, durch Umbördeln im Randbereich mit dem Versteifungsträger 4 verbunden.

Wie dies weiter aus der Fig. 2 ersichtlich ist, die die Instrumententafel 1 im montierten Zustand zeigt, kann an den windschutzscheibennahen Randbereich 18 anschließend eine Ausströmerblende 19 mit wenigstens einer herkömmlichen Ausströmdüse angeordnet sein. An den gegenüberliegenden Randbereich schließt sich an den Versteifungsträger 4 in Richtung zum Fahrzeuginnenraum hin eine Slushhaut 20 als Außenhaut des Grundkörpers 2 an.

Mit einem derartigen Aufbau wird einerseits ein optisch ansprechendes Gestaltungselement im Oberseitenbereich der Instrumententafel 1 aufgrund der ein gleichmäßiges Perforationsmuster aufweisenden Lochblechplatte 16 ausgebildet, wobei ein Teil der Perforierungen 17, die die Ausströmdüsen 6, 7 und 8 überdecken in einer Doppelfunktion für eine diffuse Belüftung sorgen, indem sie die über den Luftkanal 15 entsprechend der Pfeile 21 einströmende Luft über die Ausströmdüsen 6, 7, 8 und die Lochblechplatte 16 hindurch zugfrei und geräuscharm als diffuse Belüftung in den Innenraum ausströmen lassen, wie dies in der Fig. 2 durch die Pfeile 10 schematisch angedeutet ist. Durch die Lamellen 9 in den Ausströmdüsen 6, 7, 8 kann der Luftstrom zudem in eine bestimmte Richtung, z. B. auf eine Windschutzscheibe hin ausgerichtet werden, was in der Fig. 2 ebenfalls schematisch durch die Pfeile 10 dargestellt ist.

### BEZUGSZEICHENLISTE

- 1: Instrumententafel
- 2: Grundkörper
- 3: Oberseitenbereich
- 4: Versteifungsträger
- 5: Wabenstruktur
- 6: Ausströmdüse
- 7: Ausströmdüse
- 8: Ausströmdüse
- 9: Lamellen
- 10: Pfeile
- 11: Ausnehmung
- 12: Ausnehmung
- 13: Ausnehmung
- 14: Luftkanal-Unterteil
- 15: Luftkanal
- 16: Lochblechplatte
- 17: Perforierungen
- 18: windschutzscheibennaher Randbereich
- 19: Ausströmerblende
- 20: Slushhaut
- 21: Pfeile

## Patentansprüche

1. Instrumententafel für ein Fahrzeug, insbesondere für ein Kraftfahrzeug, die im montierten Zustand in einem im wesentlichen einer Windschutzscheibe zugewandten großflächigen Oberseitenbereich bereichsweise Luftdurchtrittsöffnungen zur diffusen Belüftung des Fahrzeuginnenraums aufweist, und die Instrumententafel (1) einen tragenden stabilen Grundkörper (2) aufweist, der im Oberseitenbereich (3) mit einem den Grundkörper (2) dort versteifenden flächigen Versteifungsträger (4) verbunden ist, der sich im montierten Zustand der Instrumententafel (1) vorzugsweise über die gesamte Länge des Grundkörpers (2) in Fahrzeugquerrichtung gesehen erstreckt, und der von oben her mittels einer Abdeckung (16) als optisches Gestaltungselement abgedeckt ist, die durchgehend perforiert ist mit einem Perforationsmuster **dadurch gekennzeichnet, dass** in den Versteifungsträger (4) wenigstens eine Ausströmdüse (6, 7, 8) integriert ist, die mit Mitteln (9) zum Lenken des Luftstroms in eine bestimmte Richtung versehen ist, dass jeder Ausströmdüse (6, 7, 8) eine im Grundkörper (2) ausgebildete Ausnehmung (11, 12, 13) für eine Strömungsverbindung mit einer Luftversorgungseinrichtung (15) entsprechend zugeordnet ist, und dass über die Perforierungen (17) als Luftdurchtrittsöffnungen im Bereich der wenigstens einen Ausströmdüse (6, 7, 8) eine diffuse Belüftung erzielbar ist.

2. Instrumententafel nach Anspruch 1, **dadurch gekennzeichnet, dass** der Versteifungsträger (4) eine Wabenstruktur als Versteifungsstruktur aufweist.

3. Instrumententafel nach Anspruch 1 oder Anspruch 2, **dadurch gekennzeichnet, dass** die Ausströmdüsen (6, 7, 8) Lamellen (9) als Mittel zum Lenken des Luftstroms in eine bestimmte Richtung aufweisen.

4. Instrumententafel nach einem oder mehreren der vorhergehenden Ansprüche, **dadurch gekennzeichnet, dass** in jedem Endbereich des Versteifungsträgers (4) und/oder in einem mittleren Versteifungsträgerbereich Ausströmdüsen (6, 7, 8) ausgebildet sind, die im montierten Zustand einen diffusen Luftstrom in Richtung zur Windschutzscheibe hin und/oder von der Windschutzscheibe weg lenken.

5. Instrumententafel nach einem oder mehreren der vorhergehenden Ansprüche, **dadurch gekennzeichnet, dass** die Ausströmdüsen (6, 7, 8) integral mit dem Versteifungsträger (4) bei dessen Herstellung ausgebildet sind.

6. Instrumententafel nach einem der Ansprüche 1 bis 4, **dadurch gekennzeichnet, dass** die Ausströmdüsen als separate Bauteile nach dem Herstellen des Versteifungsträgers in diesen eingesetzt sind.

7. Instrumententafel nach einem oder mehreren der vorhergehenden Ansprüche, **dadurch gekennzeichnet, dass** der Grundkörper (2) von der Unterseite her mit einem Luftkanal-Unterteil (14) verbunden ist zur Herstellung eines einzigen durchgehenden Luftkanals (15) für sämtliche der Ausströmdüsen (6, 7, 8), und dass im Luftkanal-Unterteil (14) ein Anschluss für eine Luftversorgungseinrichtung vorgesehen ist.

8. Instrumententafel nach einem oder mehreren der vorhergehenden Ansprüchen, **dadurch gekennzeichnet, dass** der Grundkörper (2) anschließend an den Versteifungsträger (4) mit einer sich im montierten Zustand der Instrumententafel (1) in Fahrzeugquerrichtung entlang des unteren Windschutzscheibenrandbereichs erstreckenden Ausströmerblende (19) verbunden ist, in der wenigstens eine mit der Luftversorgungseinrichtung in Strömungsverbindung stehende Ausströmdüse ausgebildet ist.

9. Instrumententafel nach einem oder mehreren der vorhergehenden Ansprüchen, **dadurch gekennzeichnet, dass** sich im montierten Zustand der Instrumententafel (1) an den Versteifungsträger (4) in Richtung zum Fahrzeuginnenraum hin eine Slushhaut (20) als Außenhaut des Grundkörpers (2) anschließt.

10. Instrumententafel nach einem oder mehreren der vorhergehenden Ansprüchen, **dadurch gekennzeichnet, dass** die Abdeckung (16) durch eine Blechplatte gebildet ist.

11. Instrumententafel nach einem oder mehreren der vorhergehenden Ansprüchen, **dadurch gekennzeichnet, dass** die Abdeckung (16) mit einem gleichmäßig strukturierten Perforationsmuster versehen ist.

12. Instrumententafel nach einem oder mehreren der vorhergehenden Ansprüchen, **dadurch gekennzeichnet, dass** die Perforierungen (17) durch eine Vielzahl von ringförmigen, vorzugsweise zylindrischen, Löchern oder durch eine Gitterstruktur gebildet sind.

13. Instrumententafel nach einem oder mehreren der vorhergehenden Ansprüchen, **dadurch gekennzeichnet, dass** die Abdeckung (16) mit einem Randbereich um einen entsprechend zugeordneten Randbereich des Versteifungsträgers (4) herum gebogen und befestigt ist.

14. Instrumententafel nach einem oder mehreren der vorhergehenden Ansprüchen, **dadurch gekennzeichnet, dass** die einzelnen Bauteile untereinander durch Klipp- und/oder Schraubverbindungen miteinander verbunden sind.

## Claims

1. Dashboard, for a vehicle, in particular for an automotive vehicle, which, in the fitted state, has, in some regions, in an extensive upper side region essentially facing a windscreen, air passage openings for the diffuse ventilation of the vehicle interior, and the dashboard (1) has a supporting, stable basic body (2) which is connected in the upper side region (3) to a sheetlike stiffening support (4) which stiffens the basic body (2) there and, in the fitted state of the dashboard (1), preferably extends over the entire length of the basic body (2), as seen in the transverse direction of the vehicle, and which is covered from above by means of a covering (16), as a visual design element, which is perforated throughout by a perforation pattern, **characterized in that** at least one discharging nozzle (6, 7, 8) is integrated in the stiffening support (4), the discharging nozzle being provided with means (9) for directing the air flow in a certain direction, **in that** each discharging nozzle (6, 7, 8) is correspondingly assigned a recess (11, 12, 13), formed in the basic body (2), for a flow connection to an air supply device (15), and **in that** a diffuse ventilation can be obtained via the perforations (17) as air passage openings in the region of the at least one discharging nozzle (6, 7, 8).

2. Dashboard according to Claim 1, **characterized in that** the stiffening support (4) has a honeycomb structure as the stiffening structure.

3. Dashboard according to Claim 1 or Claim 2, **characterized in that** the discharging nozzles (6, 7, 8) have slats (9) as means for directing the air flow in a certain direction.

4. Dashboard according to one or more of the preceding claims, **characterized in that** discharging nozzles (6, 7, 8) are formed in each end region of the stiffening support (4) and/or in a central stiffening-support region, the discharging nozzles, in the fitted state, directing a diffuse air flow towards the windscreen and/or away from the windscreen.

5. Dashboard according to one or more of the preceding claims, **characterized in that** the discharging nozzles (6, 7, 8) are formed integrally with the stiffening support (4) during the production thereof.

6. Dashboard according to one of Claims 1 to 4, **characterized in that**, after production of the stiffening support, the discharging nozzles are inserted therein as separate components.

7. Dashboard according to one or more of the preceding claims, **characterized in that** the basic body (2) is connected from the lower side to an air-duct lower part (14) in order to produce a single, continuous air duct (15) for all of the discharging nozzles (6, 7, 8), and **in that** a connection for an air supply device is provided in the air-duct lower part (14).

8. Dashboard according to one or more of the preceding claims, **characterized in that** the basic body (2) adjoining the stiffening support (4) is connected to a discharge panel (19) which, in the fitted state of the dashboard (1), extends in the transverse direction of the vehicle along the lower edge region of the windscreen and in which at least one discharging nozzle connected in terms of flow to the air supply device is formed.

9. Dashboard according to one or more of the preceding claims, **characterized in that**, in the fitted state of the dashboard (1), the stiffening support (4) is adjoined in the direction towards the vehicle interior by a slush skin (20) as the outer skin of the basic body (2).

10. Dashboard according to one or more of the preceding claims, **characterized in that** the covering (16) is formed by a sheet-metal panel.

11. Dashboard according to one or more of the preceding claims, **characterized in that** the covering (16) is provided with a uniformly structured perforation pattern.

12. Dashboard according to one or more of the preceding claims, **characterized in that** the perforations (17) are formed by a multiplicity of annular, preferably cylindrical, holes or by a lattice structure.

13. Dashboard according to one or more of the preceding claims, **characterized in that** the covering (16) is bent with an edge region around a correspondingly assigned edge region of the stiffening support (4) and fastened.

14. Dashboard according to one or more of the preceding claims, **characterized in that** the individual components are connected to one another by clip and/or screw connections.

## Revendications

1. Tableau de bord pour un véhicule, notamment pour un véhicule automobile, qui lorsqu'il est monté comporte par endroits, dans une zone de face supérieure à grande surface sensiblement dirigée vers un pare-brise, des orifices de passage d'air pour l'aération diffuse de l'habitacle du véhicule et le tableau de bord (1) comporte un élément de base (2) porteur stable, qui dans la zone de face supérieure (3) est relié avec un support de renfort (4) plan, renforçant l'élément de base (2) à cet endroit, qui, lorsque le tableau de bord (1) est monté, s'étend de préférence sur toute la longueur de l'élément de base (2), considéré dans le sens transversal du véhicule et qui par le dessus est recouvert au moyen d'un couvercle (16) en tant qu'élément de structure optique, qui est percé en continu selon un motif de perforation, **caractérisé en ce que** au moins une buse de sortie (6, 7, 8) qui est munie de moyens (9) pour diriger le flux d'air dans une direction définie est intégrée dans le support de renfort (4), **en ce que** à chaque buse de sortie (6, 7, 8) est associé en conséquence un évidement (11, 12, 13) conçu dans l'élément de base (2) pour une liaison par écoulement à un dispositif d'alimentation d'air (15) et **en ce que**, par l'intermédiaire des perforations (17) faisant office d'orifices de passage d'air, une aération diffuse peut être obtenue dans la zone de la au moins une buse de sortie (6, 7, 8).

2. Tableau de bord selon la revendication 1, **caractérisé en ce que** le support de renfort (4) comporte une structure en nid d'abeilles en tant que structure de renfort.

3. Tableau de bord selon la revendication 1 ou 2, **caractérisé en ce que** les buses de sortie (6, 7, 8) comportent des lamelles (9) en tant que moyens pour diriger le flux d'air dans une direction définie.

4. Tableau de bord selon l'une quelconque ou plusieurs des revendications précédentes, **caractérisé en ce que** dans chaque zone d'extrémité du support de renfort (4) ou dans une zone centrale du support de renfort sont conçues des buses de sortie (6, 7, 8) qui en position montée dirigent un flux d'air diffus en direction du pare-brise et/ou en éloignement du pare-brise.

5. Tableau de bord selon l'une quelconque ou plusieurs des revendications précédentes, **caractérisé en ce que** les buses de sortie (6, 7, 8) sont intégralement conçues avec le support de renfort (4), lors de sa fabrication.

6. Tableau de bord selon l'une quelconque des revendications 1 à 4, **caractérisé en ce que** les buses de sortie sont intégrées sous forme d'éléments séparés dans le support de renfort, après la fabrication de ce dernier.

7. Tableau de bord selon l'une quelconque ou plusieurs des revendications précédentes, **caractérisé en ce que** l'élément de base (2) est relié par le dessous avec une partie inférieure de conduit d'air (14), pour l'établissement d'un conduit d'air unique traversant (15) pour l'ensemble des buses de sortie (6, 7, 8) et **en ce que** dans la partie inférieure de conduit d'air (14) est prévu un raccordement pour un dispositif d'alimentation d'air.

8. Tableau de bord selon l'une quelconque ou plusieurs des revendications précédentes, **caractérisé en ce que** dans la continuité du support de renfort (4), l'élément de base (2) est relié à un bandeau d'échappement (19) qui lorsque le tableau de bord (1) est monté s'étend dans le sens transversal du véhicule, le long de la zone de bordure inférieure du pare-brise, dans lequel est conçue au moins une buse de sortie qui est en liaison par écoulement avec le dispositif d'alimentation d'air.

9. Tableau de bord selon l'une quelconque ou plusieurs des revendications précédentes, **caractérisé en ce que**, lorsque le tableau de bord (1) est monté, une peau de revêtement (20) se raccorde sur le support de renfort (4), en direction de l'habitacle du véhicule, en tant qu'enveloppe extérieure de l'élément de base (2).

10. Tableau de bord selon l'une quelconque ou plusieurs des revendications précédentes, **caractérisé en ce que** le couvercle (16) est formé par une plaque en tôle.

11. Tableau de bord selon l'une quelconque ou plusieurs des revendications précédentes, **caractérisé en ce que** le couvercle (16) est muni d'un motif de perforation à structure régulière.

12. Tableau de bord selon l'une quelconque ou plusieurs des revendications précédentes, **caractérisé en ce que** les perforations (17) sont formées d'une pluralité de trous annulaires, de préférence cylindriques ou par une structure en treillis.

13. Tableau de bord selon l'une quelconque ou plusieurs des revendications précédentes, **caractérisé en ce que**, par une zone de bordure, le couvercle (16) est cintré et fixé autour d'une zone de bordure associée en conséquence du support de renfort (4) .

14. Tableau de bord selon l'une quelconque ou plusieurs des revendications précédentes, **caractérisé en ce que** les éléments individuels sont reliés entre eux par des assemblages par clips et/ou par vis.
